# EUROPÄISCHE PATENTSCHRIFT

(11) **EP 1 225 806 B1**
(45) Veröffentlichungstag und Bekanntmachung des Hinweises auf die Patenterteilung: **21.04.2004**
(21) Anmeldenummer: 00983034.0
(22) Anmeldetag: 13.10.2000
(51) Int. Cl.: A21B 3/15, F24C 15/16

(54) **GARGUTTRÄGERSYSTEM FÜR EINEN BACKOFEN**
SUPPORT SYSTEM FOR COOKING ITEMS IN A BAKING OVEN
SYSTEME DE SUPPORT D'ARTICLE A CUIRE DESTINE A UN FOUR

(30) Priorität: 25.10.1999 DE 19951267
(43) Veröffentlichungstag der Anmeldung: 31.07.2002
(73) Patentinhaber: Accuride International GmbH, 65582 Diez (DE)
(72) Erfinder: DOBBERSTEIN, Klaus, 65614 Beselich (DE)
(74) Vertreter: Weber, Dieter, Dr.
(86) Internationale Anmeldenummer: PCT/DE2000/003661
(87) Internationale Veröffentlichungsnummer: WO 2001/030162

(56) Entgegenhaltungen:
- EP-A- 0 407 742
- EP-A- 0 931 985
- EP-A- 0 952 403
- DE-A- 4 446 757
- DE-U- 7 708 782
- GB-A- 2 196 109
- US-A- 4 872 734

## Beschreibung

Die Erfindung betrifft ein Gargutträgersystem für einen Backofen mit wenigstens einem Gargutträger, wenigstens einem Paar Teleskopführungen, welche jeweils wenigstens eine Innenschiene und eine Außenschiene aufweisen, und an den Seitenwänden der Backmuffel angeordneten Wandhalterungen, die für eine lösbare Befestigung der Teleskopführungen in verschiedenen Ebenen der Backofenmuffel ausgelegt sind, wobei der Gargutträger über die Teleskopführungen in der Backofenmuffel aus dieser herausziehbar gelagert ist.

Mit dem Begriff "Gargutträger" werden nachfolgend sämtliche Einschübe bezeichnet, die üblicherweise in Backöfen verwendet werden, wie Backbleche, Roste, Backschalen usw. Den Innenraum eines Backofens oder Herdes bildet die sogenannte Backmuffel oder Muffel. Wird nachfolgend in Bezug auf den Backofen, den Gargutträger oder die Teleskopführungen von "hinten" gesprochen, so ist damit ein Bereich in der Nähe der Muffelrückwand bzw. bei einem Teil, das in den Backofen eingeführt wird, der Bereich, der in die Nähe der Muffelrückwand gebracht wird, gemeint. "Vorne" bezeichnet den Bereich in der Nähe der Muffel- oder Backofenöffnung. Als "Seitenwand" wird nachfolgend die den Backofeninnenraum seitlich begrenzende Wand bezeichnet. Dies kann die Seitenwand der Backofenmuffel selbst sein. Es kann aber auch eine zusätzlich vor der eigentlichen Muffelseitenwand in dem Backofen angeordnete Wand, ein Block, ein gefalztes oder gebogenes Blech, ein Profil oder eine andere seitliche Befestigungseinrichtung sein, wie dies bei einigen Backöfen üblich ist.

Bei bekannten Backöfen wird der Gargutträger in Nuten, die in der Seitenwand ausgebildet sind, geführt. Auf beiden Seiten sind in verschiedenen Höhen oder Ebenen mehrere Nuten vorgesehen, damit der Gargutträger in verschiedenen Höhen in die Backofenmuffel eingeführt werden kann oder damit mehrere Gargutträger gleichzeitig in dem Backofen untergebracht werden können. Das Gleitverhalten der Gargutträger in solchen Nuten hängt von der Oberflächenbeschaffenheit der aufeinander gleitenden Flächen und der Belastung des Gargutträgers ab und ist vergleichsweise schlecht. Bei anderen bekannten Backöfen sind vor den Seitenwänden Gitter mit horizontalen Stäben angeordnet, auf denen die Gargutträger geführt werden. Aufgrund der geringeren Auflagefläche der zumeist runden horizontalen Gitterstäbe ist das Gleitverhalten gegenüber Nuten etwas verbessert. Beide vorgenannten Führungseinrichtungen für Gargutträger haben den Nachteil, daß der Gargutträger nur bis zu einer bestimmten Weite aus dem Backofen herausgezogen werden kann, ohne daß er nach unten abkippt oder vorne festgehalten werden muß. Die oberen Nutbegrenzungen oder in geringem Abstand über dem Gargutträger vorgesehene weitere horizontale Gitterstäbe können den Gargutträger zwar in gewissem Umfang gegen ein Abkippen abstützen und ermöglichen so einen etwas längeren Auszugsweg, ein vollständiges Herausziehen des Gargutträgers bis vor die Muffel, ohne daß der Gargutträger von einer Person gehalten werden muß, ist bei solchen Anordnungen jedoch nicht möglich.

Bei verbesserten Backöfen sind an der Seitenwand oder an einem Gitter Teleskopführungen befestigt, auf deren bewegliche Schiene ein Gargutträger auflegbar ist. Weisen die Teleskopführungen zwischen der stationären Schiene und der für die Auflage des Gargutträgers vorgesehenen beweglichen Schiene eine oder mehrere Mittelschienen auf, so ist ein Auszug der Teleskopführungen so weit möglich, daß der Gargutträger vollständig aus dem Backofen bis vor die Muffel ausgezogen werden kann. Es ist weiterhin bekannt, daß der auf der beweglichen Teleskopführungsschiene aufliegende Gargutträger weiterhin auf dieser Schiene gleitbar gelagert ist, so daß er nach vollständigem Auszug der Teleskopführung noch um eine weitere Wegstrecke auf der Schiene bis vor die Backofenmuffel gezogen werden kann. Dies erlaubt die Verwendung von Teleskopführungen mit lediglich zwei Schienen, was aus Kostengründen vorteilhaft ist. Die Teleskopführungen erleichtern aufgrund ihrer Leichtgängigkeit allgemein das Ausziehen und Einschieben des Gargutträgers und gewährleisten Stabilität und Sicherheit gegen ein Abkippen des Gargutträgers in der ausgezogenen Stellung. Um mehrere Gargutträger in einem Ofen unterbringen zu können oder um einen Gargutträger in verschiedenen Ebenen positionieren zu können, ist es bei den vorgenannten bekannten Backöfen erforderlich, daß in jeder Ebene ein Paar von Teleskopführungen vorgesehen ist, was wiederum die Kosten für solche Backöfen erhöht. Weiterhin nehmen sowohl die genutzten als auch die ungenutzten Teleskopführungen in der Backofenmuffel viel Raum ein, was die Luftzirkulation in Umluftherden verschlechtert. Da Teleskopführungen in der Regel aus Metall gefertigt sind, besitzen sie eine hohe Wärmekapazität. Da auch die nicht genutzten Teleskopführungen in solchen Backöfen aufgeheizt werden, fließt eine gewisse Menge an Wärmeenergie unnötigerweise in diese ungenutzten Teleskopführungen und steigert somit den Energieverbrauch derartiger Backöfen. Ein weiterer Nachteil besteht darin, daß die Teleskopführungen die häufig seitlich in der Backofenmuffel angebrachte Beleuchtung teilweise abdecken und damit die Sicht im Backofen beeinträchtigen. Es sind weiterhin Backöfen bekannt, bei denen die Teleskopführungen lösbar, z.B. mittels Schrauben, an der Seitenwand befestigt sind. So können die Teleskopführungen nach Bedarf in bestimmten Ebenen montiert und demontiert werden und das Vorhandensein von nicht benutzten Teleskopführungen im Backofen vermieden werden. Sind in dem Backofen nicht in jeder Ebene Teleskopführungen angebracht, so ist jedoch bei solchen Öfen eine Höhenverstellung des Gargutträgers während des Backens oder Garens nicht möglich. Hierfür müßten zunächst die Teleskopführungen demontiert und in einer anderen Ebene wieder montiert werden. Dies ist aufwendig und unpraktisch und stellt ein Handhabungsproblem dar, da der Gargutträger zunächst aus dem Backofen herausgenommen und irgendwo abgestellt werden muß und die Teleskopführungen zudem stark aufgeheizt sind. Es wäre eine Verschwendung von Energie und für den Back- oder Garvorgang auch sehr unzweckmäßig, wenn man die Teleskopführungen vor der Demontage erst für einen gewissen Zeitraum abkühlen lassen müßte.

GB-A-2196109 zeigt die Merkmale im Oberbegriff von Anspruch 1.

Die Aufgabe der vorliegenden Erfindung besteht daher darin, ein Gargutträgersystem der eingangs genannten Art bereitzustellen, bei dem im Backofen nur die minimal erforderliche Anzahl an Teleskopführungen vorhanden ist und trotzdem ein einfacher und komfortabler Wechsel der Ebenen der Gargutträger ohne aufwendige Demontagearbeiten möglich ist.

Diese Aufgabe wird durch ein Gargutträgersystem mit den im kennzeichnenden Teil von Anspruch 1 aufgeführten Merkmalen gelöst.

Jeder Gargutträger, der in den Backofen eingeschoben wird, ist mit dem erforderlichen Paar Teleskopführungen zu einer Gargutträgereinheit verbunden. Gargutträger und Teleskopführungen werden somit als Einheit in den Backofen eingeführt und auch wieder entnommen. Die Teleskopführungen sind jeweils seitlich an dem Gargutträger befestigt. Die Befestigung kann unlösbar, z.B. durch Schweißen, Nieten oder anderweitig ausgebildet sein. Eine lösbare Verbindung kann durch Verschrauben, Stecken, Verklemmen, Verrasten oder in anderer Weise erfolgen. Eine lösbare Verbindung hat den Vorteil, daß die Einheit aus Gargutträger und Teleskopführungen in diese Einzelbestandteile zerlegt werden kann, um sie getrennt leichter zu reinigen. Weiterhin kann hierdurch eine geringe Anzahl an Teleskopführungen für verschiedenste Gargutträger verwendet werden. Üblicherweise werden in einen Backofen gleichzeitig nicht mehr als zwei bis drei Gargutträger eingeschoben. Jedoch ist meistens eine Vielzahl verschiedener Arten von Gargutträgern für verschiedene Verwendungen, wie Backbleche, Roste, Tropfwannen, usw., vorhanden, die dann je nach Bedarf mit den Teleskopführungen ausgestattet werden können.

Als "Innenschiene" ist hierin die bewegliche Schiene einer Teleskopführung bezeichnet, die bezüglich der Muffelseitenwand dem Backofeninnenraum zugewandt ist. Die Verbindung zwischen Gargutträger und Teleskopführung erfolgt zweckmäßigerweise über die Innenschiene. Als "Außenschiene" wird die stationäre Schiene der Teleskopführung bezeichnet, die in der Backofenmuffel lösbar an den Seitenwänden bzw. den dafür vorgesehenen Wandhalterungen befestigt ist. Wandhalterungen können in den Seitenwänden vorgesehene Öffnungen, Schlitze oder Ausnehmungen sein, in welche die Teleskopführungen eingehängt, eingerastet oder anderweitig befestigt werden. Als Wandhalterungen können aber auch separate an den Seitenwänden angebrachte Befestigungseinrichtungen vorgesehen sein. Weiterhin können Wandhalterungen vor den Seitenwänden angeordnete Gitter oder gefalzte Bleche mit entsprechenden Befestigungseinrichtungen sein.

Bei einer Ausführungsform der Erfindung weisen die Wandhalterungen in der Nähe der Muffelrückwand Vorsprünge oder Ausnehmungen auf, die für eine Aufnahme der Außenschienen der Teleskopführungen oder von an den hinteren Enden der Außenschienen vorgesehenen Haltelaschen durch Einschieben in horizontaler Richtung ausgelegt sind. Es ist weiterhin vorteilhaft, wenn die Wandhalterungen in der Nähe der Muffelöffnung Seitenwandaussparungen und die Außenschienen der Teleskopführungen Bajonette oder ähnliche Befestigungseinrichtungen, wie Laschen, Hacken oder Vorsprünge, die nachfolgend mit dem Begriff "Bajonette" bezeichnet werden, aufweisen, die so ausgelegt sind, daß die Bajonette mit den Seitenwandaussparungen in Eingriff treten und für eine Arretierung der Außenschienen in horizontaler Richtung einrastbar sind. Bei dieser Ausführungsform wird die Gargutträgereinheit über die Außenschienen der Teleskopführungen beidseitig jeweils im hinteren und im vorderen Bereich der Backofenmuffel seitlich befestigt. Die Befestigung im hinteren Bereich erfolgt durch Einschieben der Außenschiene oder einer daran vorgesehenen Lasche in eine dafür vorgesehene Halterung oder Öffnung in horizontaler Richtung. Diese hintere Aufnahme des Gargutträgers ist so ausgelegt, daß der Gargutträger in diesem hinteren Bereich gegen eine vertikale Bewegung in der entsprechenden Ebene gesichert und nach unten abgestützt ist. Die lösbare Befestigung der Außenschiene im vorderen Bereich stützt den Gargutträger ebenfalls nach unten ab und arretiert die Außenschiene gleichzeitig in horizontaler Richtung. Hierdurch wird verhindert, daß der Gargutträger zusammen mit der gesamten Teleskopführung aus dem Backofen herausgezogen wird, wenn beim Backen oder Garen nur der Gargutträger zum Betrachten oder Bearbeiten des Gargutes vorgezogen werden soll. Zum Einsetzen der gesamten Gargutträgereinheit wird somit zunächst die Teleskopführung im hinteren Bereich in die entsprechende Aufnahme eingeschoben und die Arretierung anschließend durch Einrasten des Bajonetts im vorderen Bereich bewirkt.

Bei einer weiteren bevorzugten Ausführungsform des erfindungsgemäßen Gargutträgersystems weisen die Außenschienen der Teleskopführungen einen angelenkt gelagerten Riegel und die Innenschienen der Teleskopführungen eine Einhalterung auf, wobei der Riegel zur Verhinderung einer Bewegung der Innenschiene gegenüber der Außenschiene mit der Einhalterung in Eingriff bringbar ist, wenn die Innenschiene im wesentlichen vollständig eingeschoben ist. Durch die Verriegelung der Innenschiene mit der Außenschiene, wenn die Teleskopführung vollständig eingeschoben ist, wird bei der Entnahme der Gargutträgereinheit aus dem Backofen verhindert, daß die Teleskopschienen aufgrund von Reibung der Außenschiene an den Wandhalterungen oder bei Schräghaltung der Gargutträgereinheit auseinandergleiten. Bei der Entnahme der Gargutträgereinheit bleibt die Teleskopführung somit zusammengeschoben, was die Handhabung sehr erleichtert.

"Verriegelung" bezeichnet im Zusammenhang mit dieser Erfindung einen Zustand, bei dem die Innenschiene der Teleskopführung gegenüber der Außenschiene nicht verschiebbar ist. Bei "Entriegelung" kann die Innenschiene gegenüber der Außenschiene verschoben werden, d.h. die Teleskopführung kann ausgezogen werden. "Arretierung" der Außenschiene an der Seitenwand oder an der Wandhalterung bezeichnet einen Zustand, bei dem die Außenschiene bezüglich der Seitenwand nicht horizontal verschiebbar ist.

Für ein leichtes Ausziehen und Einschieben des Gargutträgers während des Backens oder Garens ist es erfindungsgemäß vorteilhaft. wenn die Schienen der Teleskopführungen über vorzugsweise käfiggelagerte Kugeln, Rollen oder Walzen gelagert und gegeneinander verschiebbar sind. Es eignen sich zwar auch Teleskopführungen mit unmittelbar gegeneinander gleitenden Schienen, wenn Kosten für die kugelgelagerten Teleskopführungen eingespart werden sollen, jedoch weisen solche Teleskopführungen ein etwas schlechteres Gleitverhalten auf. Selbstverständlich sind die erfindungsgemäßen Teleskopführungen, wie dies bei den meisten Teleskopführungen üblich ist, mit Auszugsbegrenzern versehen, um ein vollständiges Auseinanderziehen und Trennen der Schienen zu verhindern. Es ist auch vorteilhaft, wenn die Teleskopführungen zusätzlich zu der Innenschiene und der Außenschiene eine oder mehrere Mittelschienen aufweisen. Die Länge der Teleskopführungen ist durch die Tiefe des Backofeninnenraums begrenzt und entspricht daher etwa der Tiefe der verwendeten Gargutträger. Längere Teleskopführungen würden ein Schließen der Backofentür verhindern. Der Auszug zweier Teleskopführungsschienen gegeneinander bis zur Auszugsbegrenzung entspricht daher maximal der Länge der jeweiligen Schienen, vermindert um den Raum, den die zwischen den Schienen vorgesehen Kugeln, Rollen oder Walzen einnehmen. Je besser das Gleitverhalten der Teleskopführungen sein soll, desto mehr Kugeln, Rollen oder Walzen sind vorgesehen. Ist der Gargutträger nicht zusätzlich noch auf den Teleskopführungen gleitend nach vorne verschiebbar, wie dies aus dem Stand der Technik bekannt ist, so ist ein Auszug des Gargutträgers bis vor die Backofenmuffel nur mit Teleskopführungen realisierbar, die drei oder mehr Schienen aufweisen.

Bei einer besonders bevorzugten Ausführungsform des erfindungsgemäßen Gargutträgersystems sind an den Wandhalterungen oder an der Muffelseitenwand in der Nähe der Muffelrückwand Einführhilfen mit oberen, in Richtung zur Muffelrückwand schräg aufwärts und/oder unteren, in Richtung zur Muffelrückwand schräg abwärts verlaufenden Führungsflächen vorgesehen. Solche Einführhilfen oder Führungsschrägen erleichtern das Einführen der Gargutträgereinheit in die hintere Befestigungsaufnahme. Die hintere Aufnahme kann somit genauer und mit weniger Spiel an die aufzunehmende Außenschiene oder die aufzunehmende Lasche an der Außenschiene angepaßt sein, wodurch der Gargutträger wiederum einen festeren Halt in der Backofenmuffel erhält. Die Einführhilfen erleichtern das Einsetzen der Gargutträgereinheit, ohne daß die Bedienperson die hinteren Aufnahmeeinrichtungen präzise anvisieren muß. Die Einführhilfen können einseitig, z.B. nur von unten, zur richtigen Lagerungshöhe der Gargutträgereinheit führen. Vorteilhaft ist es jedoch, wenn die Führung von oben und von unten erfolgt.

Die vordere Befestigung des Gargutträgersystems erfolgt erfindungsgemäß vorteilhaft an Aussparungen in der Seitenwand der Backofenmuffel oder der vorderen Wandhalterungen. Zweckmäßigerweise erlauben die Seitenwandaussparungen einen Zugang von vorne. Dies wird bei einer als Profil oder als gefalztes Blech ausgebildeten Seitenwand oder Wandhalterung dadurch verwirklicht, daß sich die Seitenwandaussparung von dem sich parallel zur Muffelseitenwand erstreckenden Abschnitt des Profils oder des Bleches bis über eine Kante oder Falz in einen sich im wesentlichen senkrecht dazu in Richtung der Muffelseitenwand erstreckenden zur Muffelöffnung hin weisenden Abschnitt des Profiles oder des Bleches erstreckt. Die Seitenwandaussparungen weisen weiterhin eine Bajonetteinhalterung in Form einer nach oben offenen, schlitzförmigen Ausnehmung auf, in welche das Bajonett durch Absenken einrastbar ist. Zweckmäßig ist es auch, wenn die Seitenwandaussparung vor der Bajonetteinhalterung eine Zuführschräge aufweist, über welche das Bajonett der Bajonetteinhalterung in ähnlicher Weise, wie bei den vorbeschriebenen Einführhilfen, zugeführt werden kann. Die Arretierung der Außenschiene erfolgt durch Einrasten des Bajonetts in die Bajonetteinhalterung, indem das Bajonett über die Bajonetteinhalterung geführt und in diese durch Absenken eingesetzt bzw. eingerastet wird. Die Außenschiene der Gargutträgereinheit ist damit gegen eine horizontale Verschiebung arretiert. Das Lösen der Arretierung erfolgt durch Anheben der Gargutträgereinheit.

Um ein Lösen der Arretierung der Gargutträgereinheit durch versehentliches Anheben bzw. das versehentliche Anheben selbst zu verhindern, weist der Riegel des erfindungsgemäßen Gargutträgersystems vorteilhaft eine obere Anschlagfläche und die Seitenwandaussparung einen oberen Gegenanschlag auf, die so ausgelegt sind, daß sie ein Anheben der Gargutträgereinheit begrenzen, wenn sich der Riegel in einer Entriegelungsstellung befindet.

Zweckmäßig weist der Riegel eine Rastnase auf, die so angeordnet ist, daß sie bei Verdrehung des Riegels in eine Verriegelungsstellung mit der Einhalterung der Innenschiene in Eingriff tritt und daß die obere Anschlagfläche des Riegels so ausgebildet ist, daß sie bei Verdrehung des Riegels in die Verriegelungsstellung von dem oberen Gegenanschlag der Seitenwandaussparung so weit entfernt wird, daß das Bajonett vollständig aus der Bajonetteinhalterung herausführbar ist. Hierdurch wird sichergestellt, daß beim Entarretieren der Außenschienen zum Herausnehmen der Gargutträgereinheit gleichzeitig die Teleskopführung gegen ein Auseinandergleiten der Schienen gesichert wird. Entarretierung der Außenschienen und Verriegelung der Teleskopführung erfolgen somit in einem Schritt. Der Riegel kann in die Verriegelungsstellung gebracht werden, indem der Gargutträger angehoben wird, wenn er vollständig in die Backofenmuffel eingeschoben ist. Hierbei wird die obere Anschlagfläche des Riegels an den oberen Gegenanschlag der Seitenwandaussparung gedrückt und der Riegel dabei um seinen Drehpunkt an der Außenschiene in die Verriegelungsstellung verdreht. Dies ist jedoch nur dann möglich, wenn der Gargutträger bzw. die Innenschiene vollständig in die Teleskopführung eingeschoben ist und die Rastnase in die Einhalterung an der Innenschiene eindringen und mit dieser in Eingriff treten kann. Befindet sich die Einhalterung an der Innenschiene nicht in der entsprechenden Position, wenn die Innenschiene nicht vollständig eingeschoben ist, so kann der Riegel nicht aus der Entriegelungsstellung in die Verriegelungsstellung gebracht werden, da dann die Rastnase auf der Innenschiene zu liegen.kommt und ein weiteres Verdrehen des Riegels in die Verriegelungsstellung verhindert wird. Auch eine Entarretierung der Außenschiene aus der Wandhalterung ist dann nicht möglich, da die obere Anschlagfläche des Riegels das Herausführen des Bajonetts aus der Bajonetteinhalterung verhindert.

Der Riegel kann vorteilhaft weiterhin eine untere Anschlagfläche und die Seitenwandaussparung einen unteren Gegenanschlag aufweisen, die so ausgelegt sind, daß der Riegel, der sich beim Einsetzen der Gargutträgereinheit in der Verriegelungsstellung befindet, beim Absenken der Gargutträgereinheit zum Einrasten des Bajonetts in die Entriegelungsstellung bewegt. Der Riegel wird somit durch den Druck des unteren Gegenanschlags der Seitenwandaussparung auf die untere Anschlagfläche des Riegels nach oben gedrückt bzw. verdreht. Arretierung und Entriegelung der Gargutträgereinheit erfolgen somit ebenfalls in einem Schritt.

Bei einer Ausführungsform der Erfindung weist der Riegel weiterhin einen Handentriegelungstaster auf, mit dem der Riegel durch Drücken des Tasters von der Entriegelungs- in die Verriegelungsstellung verdreht werden kann. Dabei drückt die untere Anschlagfläche des Riegels auf den unteren Gegenanschlag der Seitenwandaussparung und drückt bzw. hebelt dabei die Gargutträgereinheit nach oben. Hierbei erfolgt wiederum gleichzeitig eine Verriegelung der Teleskopführung und eine Entarretierung der Außenschiene durch Anheben und Herausführen des Bajonetts aus der Bajonetteinhalterung.

Weitere Vorteile, Merkmale und Ausführungsformen der vorliegenden Erfindung werden deutlich anhand der nachfolgenden Figuren und der dazugehörigen Beschreibung.
- Figur 1: zeigt eine abgebrochene Vorderseitenansicht eines Backofenraumes mit eingesetzter Gargutträgereinheit.
- Figur 2: zeigt eine Draufsicht auf die linke Seitenwand des Backofens aus Figur 1.
- Figur 3: zeigt eine abgebrochene Darstellung der hinteren Wandhalterung, wenn man in Figur 2 in Richtung des Pfeiles A blickt.
- Figur 4: zeigt einen abgebrochenen Teilausschnitt aus Figur 1 in vergrößerter Darstellung.
- Figur 5: zeigt die Teleskopführung und die Wandhalterung der erfindungsgemäßen Gargutträgereinheit in ausgezogenem Zustand in abgebrochener Darstellung von der Seite.
- Figur 6: zeigt die Teleskopführung und die Wandhalterung der erfindungsgemäßen Gargutträgereinheit in eingefahrenem Zustand in abgebrochener Darstellung von der Seite.
- Figuren 7a und 7b: zeigen den Riegel der erfindungsgemäßen Gargutträgereinheit von der Seite bzw. von vorne.
- Figur 8a: zeigt eine Teleskopführung der erfindungsgemäßen Gargutträgereinheit in abgebrochener Darstellung von der Seite.
- Figur 8b: zeigt eine abgebrochene Schnittdarstellung in Blickrichtung des Pfeiles A in Figur 8a.

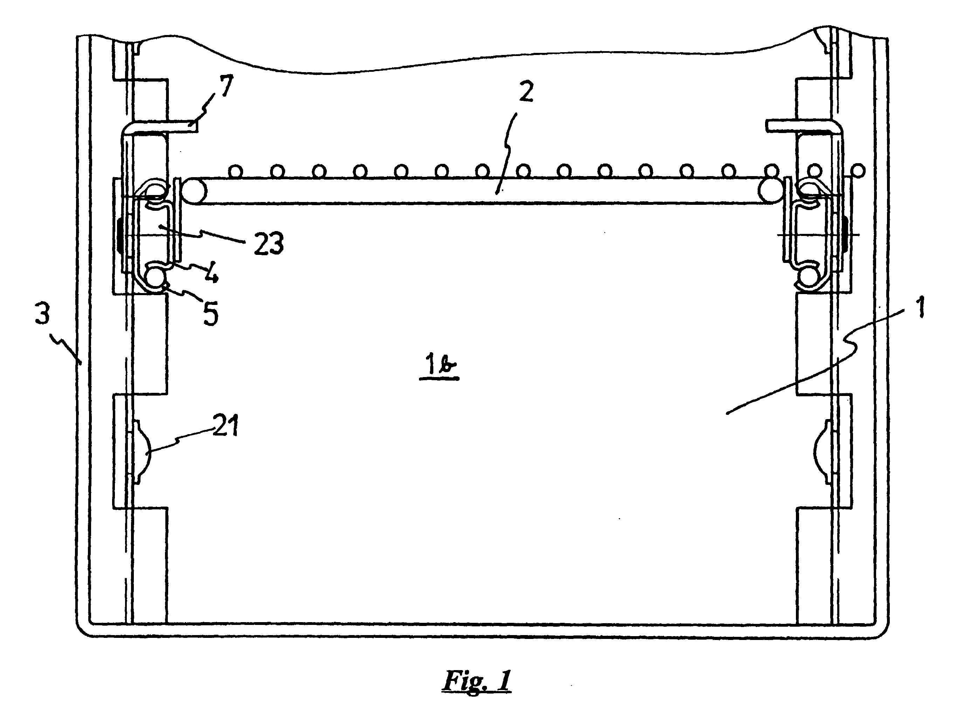

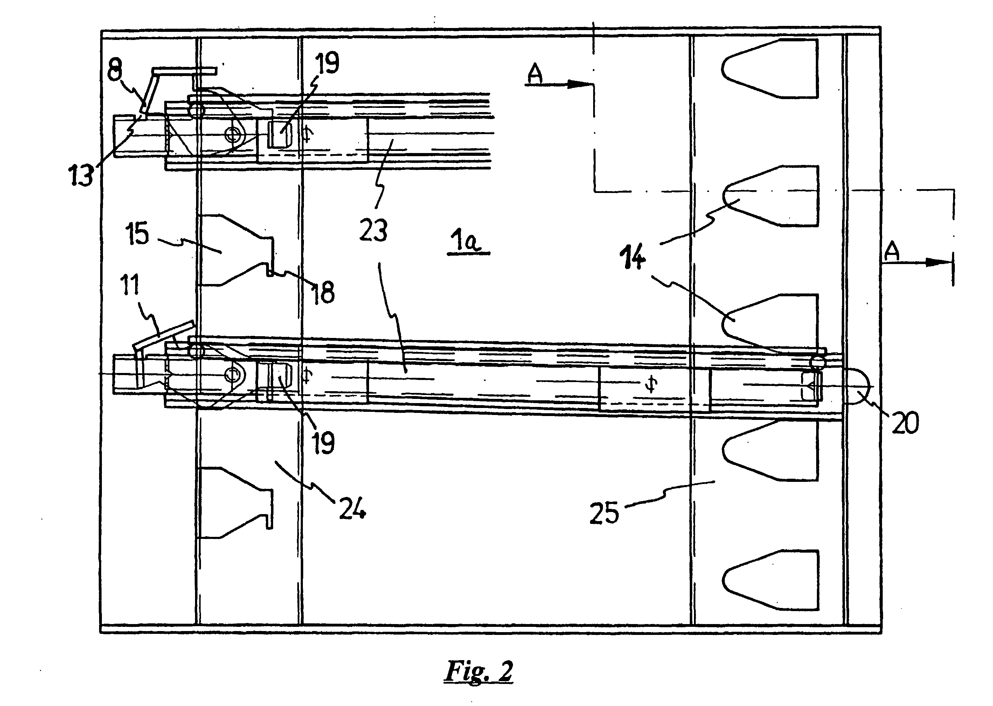

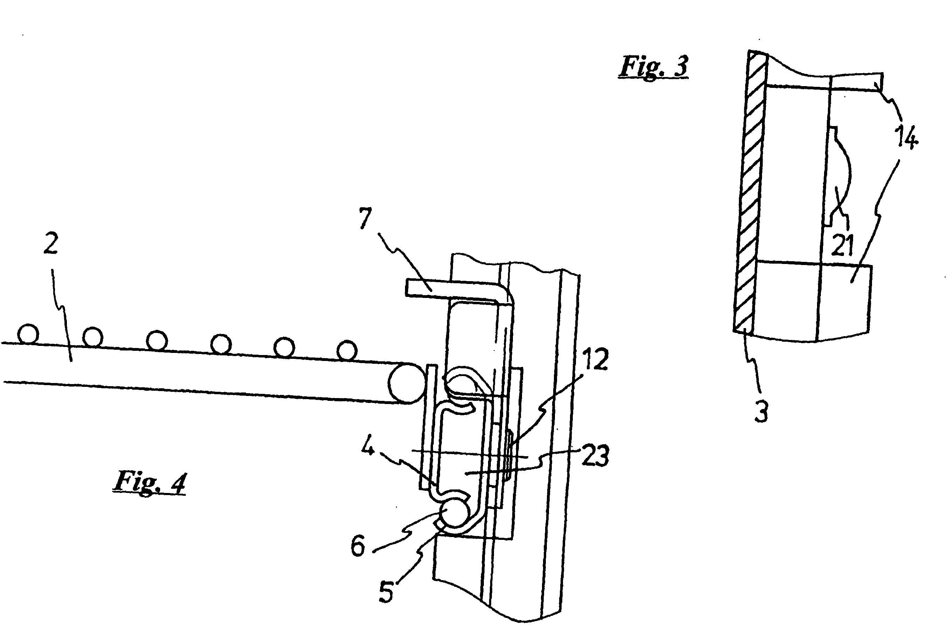

Figur 1 zeigt einen Backofenraum 1 mit Seitenwänden 3 und einer Muffelrückwand 1 b, worin ein erfindungsgemäßes Gargutträgersystem angeordnet ist. Wie in Figur 4 im Detail dargestellt ist, ist ein Gargutträger 2 über ein Verbindungsstück beidseitig jeweils mit der Innenschiene 4 einer Teleskopführung 23 fest verbunden. Die Teleskopführungen weisen jeweils eine Außenschiene 5 auf, und Innenschiene 4 und Außenschiene 5 sind über Kugeln 6 gegeneinander verschiebbar gelagert. An der Außenschiene 5 ist ein Riegel 7 über einen Gelenkbolzen 12 drehbar befestigt. Die vorderen und hinteren Wandhalterungen 24 und 25 bestehen bei der in den Figuren dargestellten Ausführungsform aus seitlich umgefalzten Blechen oder Profilen, die zur lösbaren Befestigung der Gargutträgereinheit Seitenwandaussparungen 15 im vorderen Bereich der Backofenmuffel und Ausnehmungen 21 im hinteren Bereich der Muffel (Figur 3) aufweisen. Wie in Figur 2 zu erkennen ist, sind die dargestellten Wandhalterungen 24 und 25 für eine Anordnung von Gargutträgereinheiten in vier Ebenen ausgelegt. Die Außenschiene der Teleskopführung weist an ihrem Ende eine Haltelasche 20 auf, die beim Einsetzen der erfindungsgemäßen Gargutträgereinheit in den Backofen in die in Figur 3 dargestellte Ausnehmung 21 eingeführt wird. Zur Erleichterung des Einführens sind an der hinteren Wandhalterung 25 Einführhilfen 14 mit oberen und unteren Führungsschrägen für jede Ebene in dem Backofen vorgesehen.

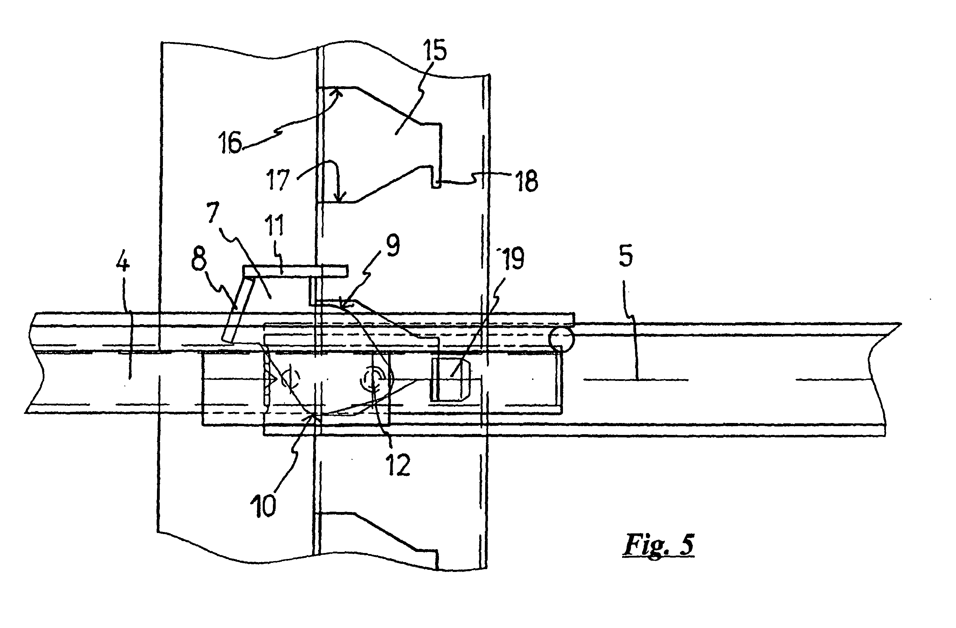

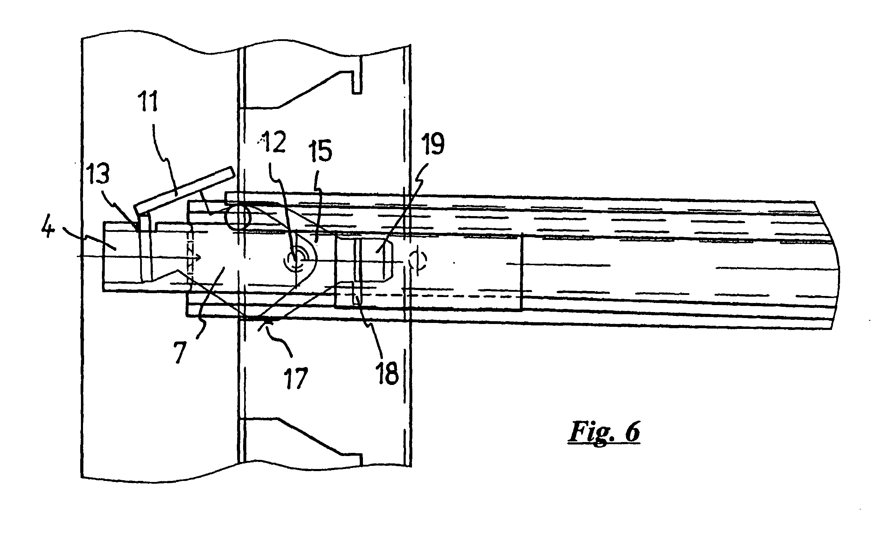

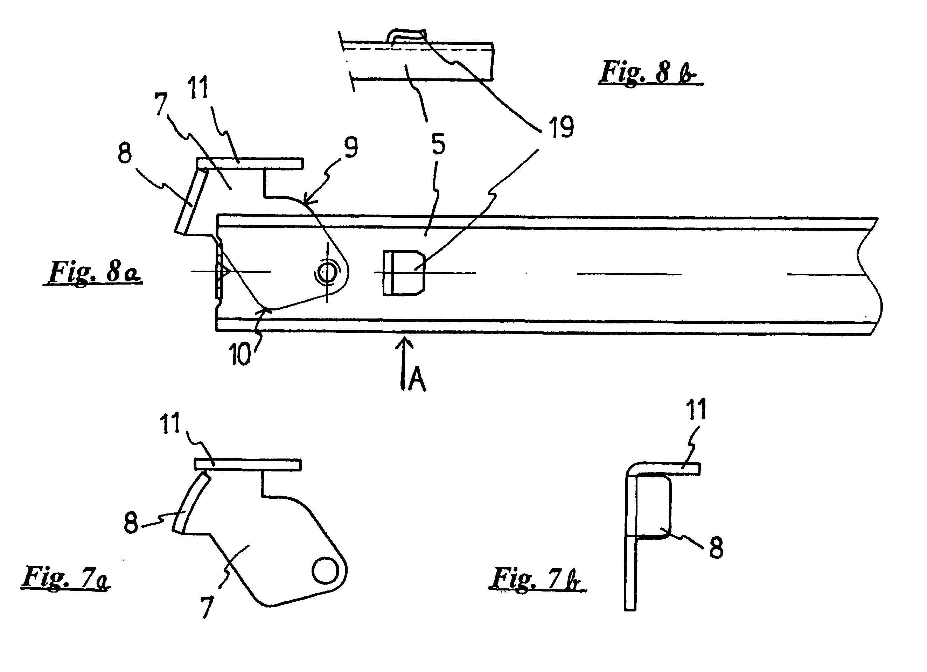

Im vorderen Abschnitt weist die Außenschiene 5 ein Bajonett 19 auf, das als eine Lasche ausgebildet ist, die von der Außenschiene vorsteht und sich im wesentlichen parallel zu dieser nach hinten erstreckt, wie es in den Figuren 8a und 8b gezeigt ist. Figur 2 zeigt die zwei Stellungen des Riegels 7 beim Einsetzen bzw. Herausnehmen der erfindungsgemäßen Gargutträgereinheit. Bei der in Figur 2 oben und in Figur 5 dargestellten Teleskopführung befindet sich der Riegel 7 in einer Entriegelungsstellung, die er einnimmt, wenn die Gargutträgereinheit in den Backofen eingesetzt und die Außenschiene 5 durch Einrasten des Bajonetts 19 in die Bajonetteinhalterung 18 gegen eine horizontale Verschiebung arretiert ist. Die Innenschiene 4 weist eine Einhalterung 13 für den Riegel 7 auf, in die Rastnase 18 des Riegels eingreifen kann, um Außenschiene 5 und Innenschiene 4 gegen eine Verschiebung gegeneinander zu verriegeln, wie es in Figur 2 unten und in Figur 6 dargestellt ist. Um den Riegel in diese Verriegelungsstellung zu bringen, muß die Einhalterung 13 an der Innenschiene 4 unter die Rastnase 8 gebracht werden, das heißt, daß die Innenschiene 4 in die Teleskopführung 23 eingeschoben sein muß. Die Verriegelung erfolgt durch Anheben der Gargutträgereinheit an der Vorderseite, wobei gleichzeitig das Bajonett 19 aus der Bajonetteinhalterung 18 herausgehoben und damit die Außenschiene 5 aus ihrer Arretierung gegen ein horizontales Herausziehen aus dem Backofen gelöst wird. Bei der in den Figuren dargestellten Ausführungsform weist der Riegel 7 einen Handentriegelungstaster 11 auf, mit dem die Verriegelung ebenfalls durchgeführt werden kann. Der Riegel 7 weist eine untere Anschlagfläche 10 und die Seitenaussparungen einen unteren Gegenanschlag 17 auf, die beim Herunterdrücken des Entriegelungstasters 11 bzw. bei Verdrehung des Riegels in die Verriegelungsstellung gegeneinander gedrückt werden. Hierdurch wird die gesamte Gargutträgereinheit von dem Riegel 7 über den Gelenkbolzen 12 nach oben gedrückt und dabei ebenfalls das Bajonett 19 aus der Bajonetteinhalterung 18 herausgehoben. Zum Herausnehmen der Gargutträgereinheit aus dem Backofen kann somit entweder die Vorderseite der Gargutträgereinheit angehoben oder der Entriegelungstaster 11 des Riegels 7 heruntergedrückt werden.
Wie in Figur 5 dargestellt ist, weist der Riegel 7 eine obere Anschlagfläche 9 und die Seitenwandaussparung 15 einen oberen Gegenanschlag 16 auf, die in der Entriegelungsstellung ein Anheben der Gargutträgereinheit begrenzen und so ein Herausheben des Bajonetts 19 aus der Bajonetteinhalterung 18 blockieren. Bei ausgezogener Innenschiene, wie es in Figur 5 dargestellt ist, kann die Rastnase 8 des Riegels 7 nicht weiter als bis zur Oberkante der Innenschiene 4 herabgedreht werden, wodurch der Riegel in der Entriegelungsstellung gehalten wird und sich die obere Anschlagfläche 9 nicht von dem Gegenanschlag 16 der Seitenwandaussparung 15 entfernen kann. Bei ausgezogenem Gargutträger wird so ein versehentliches Entrasten des Bajonetts 19 aus der Bajonetteinhalterung 18 verhindert.

### Bezugszeichenliste

- 1: Backofenraum
- 1a: Muffelseitenwand
- 1 b: Muffelrückwand
- 2: Gargutträgereinheit
- 3: Seitenwand
- 4: Innenschiene
- 5: Außenschiene
- 6: Kugeln
- 7: Riegel
- 8: Rastnase
- 9: obere Anschlagfläche des Riegels
- 10: untere Anschlagfläche des Riegels
- 11: Handentriegelungstaster
- 12: Gelenkbolzen
- 13: Einhalterung an der Innenschiene
- 14: Einführhilfe
- 15: Seitenwandaussparung
- 16: oberer Gegenanschlag der Seitenwandaussparung
- 17: unterer Gegenanschlag der Seitenwandaussparung
- 18: Bajonetteinhalterung
- 19: Bajonett
- 20: Haltelasche
- 21: Ausnehmung für Haltelasche
- 23: Teleskopführung
- 24: vordere Wandhalterung
- 25: hintere Wandhalterung

## Patentansprüche

1. Gargutträgersystem für einen Backofen mit wenigstens einem Gargutträger (2), wenigstens einem Paar Teleskopführungen (23), welche jeweils wenigstens eine Innenschiene (4) und eine Außenschiene (5) aufweisen, und an den Seitenwänden (1a) der Backofenmuffel (1) angeordneten Wandhalterungen (24, 25), die für eine lösbare Befestigung der Teleskopführungen (23) in verschiedenen Ebenen der Backofenmuffel (1) ausgelegt sind, wobei der Gargutträger (2) über die Teleskopführungen (23) in der Backofenmuffel (1) aus dieser herausziehbar gelagert ist, **dadurch gekennzeichnet, daß**
der Gargutträger (2) mit den Teleskopführungen (23) fest oder lösbar zu einer Gargutträgereinheit verbunden ist und der Gargutträger (2) und die Teleskopführungen (23) gemeinsam als verbundene Gargutträgereinheit aus dem Backofen entfernbar sind.

2. Gargutträgersystem nach Anspruch 1, **dadurch gekennzeichnet, daß** die Wandhalterungen (25) in der Nähe der Muffelrückwand (1b) Vorsprünge oder Ausnehmungen (21) aufweisen, die für eine Aufnahme der Außenschienen (5) der Teleskopführungen (23) oder von an den hinteren Enden der Außenschienen (5) vorgesehenen Haltelaschen (20) durch Einschieben in horizontaler Richtung ausgelegt sind, und die Wandhalterungen (24) in der Nähe der Muffelöffnung Seitenwandaussparungen (15) und die Außenschienen (5) der Teleskopführungen (23) Bajonette (19) aufweisen, die so ausgelegt sind, daß die Bajonette (19) mit den Seitenwandaussparungen (15) in Eingriff treten und für eine Arretierung der Außenschienen (5) in horizontaler Richtung einrastbar sind.

3. Gargutträgersystem nach einem der Ansprüche 1 oder 2, **dadurch gekennzeichnet, daß** die Außenschienen (5) der Teleskopführungen (23) weiterhin einen angelenkt gelagerten Riegel (7) und die innenschlenen (4) der Teleskopführungen (23) eine Einhalterung (13) aufweisen, wobei der Riegel (7) zur Verhinderung einer Bewegung der innenschiene (4) gegenüber der Außenschiene (5) mit der Einhalterung (13) in Eingriff bringbar ist, wenn die innenschiene (4) im wesentlichen vollständig eingeschoben ist.

4. Gargutträgersystem nach einem der Ansprüche 1 bis 3, **dadurch gekennzeichnet, daß** die Schienen (4, 5) der Teleskopführungen (23) über vorzugsweise käfiggelagerte Kugeln, Rollen oder Walzen gelagert und gegeneinander verschiebbar sind.

5. Gargutträgersystem nach einem der Ansprüche 1 bis 4, **dadurch gekennzeichnet, daß** die Teleskopführungen (23) zusätzlich zu der Innenschiene (4) und der Außenschiene (5) eine oder mehrere Mittelschienen aufweisen.

6. Gargutträgersystem nach einem der Ansprüche 1 bis 5, **dadurch gekennzeichnet, daß** an den Wandhalterungen (25) oder an der Muffelseitenwand (1a) in der Nähe der Muffelrückwand (1b) Einführhilfen (14) mit oberen, in Richtung zur Muffelrückwand (1b) schräg aufwärts und / oder unteren, in Richtung zur Muffelrückwand (1b) schräg abwärts verlaufenden Führungsflächen vorgesehen sind.

7. Gargutträgersystem nach einem der Ansprüche 2 bis 6, **dadurch gekennzeichnet, daß** die Seitenwandaussparung (15) eine Bajonetteinhalterung (18) in Form einer nach oben offenen, schlitzförmigen Ausnehmung aufweist in welche das Bajonett (19) durch Absenken einrastbar ist.

8. Gargutträgersystem nach einem der Ansprüche 3 bis 7, **dadurch gekennzeichnet, daß** der Riegel (7) eine obere Anschlagfläche (9) und die Seitenwandaussparung (15) einen oberen Gegenanschlag (16) aufweisen, die so ausgelegt sind, daß sie ein Anheben der Gargutträgereinheit begrenzen, wenn sich der Riegel (7) in einer Entriegelungsstellung befindet.

9. Gargutträgersystem nach Anspruch 8, **dadurch gekennzeichnet, daß** der Riegel (7) eine Rastnase (8) aufweist, die so angeordnet ist, daß sie bei Verdrehen des Riegels (7) in eine Verriegelungsstellung mit der Einhalterung (13) der innenschiene (4) in Eingriff tritt, und daß die Anschlagfläche (9) des Riegels so ausgebildet ist, daß sie bei Verdrehen des Riegels in die Verriegelungsstellung von dem Gegenanschlag (16) der Seitenwandaussparung (15) so weit entfemt wird, daß das Bajonett (19) vollständig aus der Bajonetteinhalterung (18) herausführbar ist.

## Claims

1. Product support system for an oven with at least one product support (2), at least one pair of telescopic guides (23), each of which has at least one internal track (4) and one external track (5), and wall-mounted holders (24, 25) arranged on the side walls (1a) of the oven muffle (1) which are designed for a releasable attachment of the telescopic guides (23) at different levels of the oven muffle (1), the product support (2) being housed over the telescopic guides (23) in the oven muffle able to be pulled out from the latter, **characterized in that**
the product support (2) is connected in fixed or releasable manner to the telescopic guides (23) to form a product support unit and the product support (2) and the telescopic guides (23) can be removed together from the oven as a combined product support unit.

2. Product support system according to claim 1, **characterized in that** the wall-mounted holders (25) have, near to the muffle rear wall (1b), projections or recesses (21) which are designed to receive the external tracks (5) of the telescopic guides (23) or holding latches (20) provided at the rear ends of the external tracks (5) by pushing in in horizontal direction, and, near to the mouth of the muffle, the wall-mounted holders (24) have side-wall openings (15) and the external tracks (5) of the telescopic guides (23) have bayonets (19) which are designed such that the bayonets (19) engage with the side-wall openings (15) and can be locked in order to arrest the external tracks (5) in horizontal direction.

3. Product support system according to one of claims 1 or 2, **characterized in that** the external tracks (5) of the telescopic guides (23) also have a bar (7) housed articulated and the internal tracks (4) of the telescopic guides (23) have a trap (13), the bar (7) being able to be brought into engagement with the trap (13) to prevent a movement of the internal track (4) vis-à-vis the external track, if the internal track (4) is essentially completely pushed in.

4. Product support system according to one of claims 1 to 3, **characterized in that** the tracks (4,5) of the telescopic guides (23) can be housed above preferably caged ball-bearings, rollers or rolls and can be displaced against each other.

5. Product support system according to one of claims 1 to 4, **characterized in that** the telescopic guides (23) have one or more centre tracks in addition to the internal track (4) and the external track (5).

6. Product support system according to one of claims 1 to 5, **characterized in that** the insertion aids (14) with upper guide surfaces running inclined upwards towards the muffle rear wall (1b) and/or lower guide surfaces running inclined downwards towards the muffle rear wall (1b) are provided on the wall-mounted holders (25) or on the muffle side-wall (1a) near to the muffle rear wall (1b).

7. Product support system according to one of claims 2 to 6, **characterized in that** the side-wall opening (15) also has a bayonet trap (18) in the shape of a slit-shaped recess, opens to the top, into which the bayonet (19) can be locked by lowering.

8. Product support system according to one of claims 3 to 7, **characterized in that** the bar (7) has an upper stop surface (9) and the side-wall opening (15) has an upper backstop (16), which are designed such that they limit a lifting of the product support system if the bar (7) is located in an unlocking position.

9. Product support system according to claim 8, **characterized in that** the bar (7) has a detent (8), which is arranged such that, upon turning of the bar (7) into a locking position, it engages with the trap (13) of the internal track (4) and the upper stop surface (9) of the bar is developed such that, upon turning of the bar into the locking position, it is so far removed from the upper backstop (16) of the side-wall opening (15) that the bayonet (19) can be completely guided out of the bayonet trap (18).

## Revendications

1. Système de support de cuisson pour un four comportant au moins un support de cuisson (2), au moins une paire de guides télescopiques (23) qui comportent chacun au moins une glissière intérieure (4) et une glissière extérieure (5), et des fixations de paroi (24, 25) qui sont disposées sur les parois latérales (1a) de moufles de four (1) et qui sont étudiées pour fixer de façon amovible les guides télescopiques (23) dans différents plans des moufles de four (1), le support de cuisson (2) étant monté dans les moufles de four (1) de façon à pouvoir être retiré de celui-ci, au moyen des guides télescopiques (23), **caractérisé en ce que** :
le support de cuisson (2) est relié aux guides télescopiques (23) de façon fixe ou amovible par rapport à une unité de support de cuisson et le support de cuisson (2) et les guides télescopiques (23) peuvent être retirés ensemble du four en tant qu'unité de support de cuisson.

2. Système de support de cuisson selon la revendication 1, **caractérisé en ce que** les fixations de paroi (25) comportent à proximité de la paroi arrière (1 b) du moufle des saillies ou des évidements (21) qui sont étudiés pour recevoir les glissières extérieures (5) des guides télescopiques (23) ou pour recevoir des pattes de support (20) prévues à l'extrémité arrière des glissières extérieures (5) par insertion dans une direction horizontale, les fixations de paroi (24) comportent à proximité de l'ouverture du moufle des évidements de paroi latérale (15), et les glissières extérieures (5) des guides télescopiques (23) comportent des baïonnettes (19) qui sont étudiées pour que les baïonnettes (19) viennent s'engager avec les évidements de paroi latérale (15) et pour être encliquetables en vue de bloquer les glissières extérieures (5) dans une direction horizontale.

3. Système de support de cuisson selon l'une des revendications 1 ou 2, **caractérisé en ce que** les glissières extérieures (5) des guides télescopiques (23) comportent en outre un verrou (7) monté de façon articulée, et **en ce que** les glissières intérieures (4) des guides télescopiques (23) comportent un dispositif de fixation, le verrou (7) pouvant être amené en engagement avec le dispositif de fixation (13) pour éviter que la glissière intérieure (4) ne se déplace par rapport à la glissière extérieure (5) lorsque la glissière intérieure (4) est insérée sensiblement en totalité.

4. Système de support de cuisson selon l'une des revendications 1 à 3, **caractérisé en ce que** les glissières (4, 5) des guides télescopiques (23) sont montées au moyen de billes, galets ou rouleaux, avantageusement en cage, et sont déplaçables l'une par rapport à l'autre.

5. Système de support de cuisson selon l'une des revendications 1 à 4, **caractérisé en ce que** les guides télescopiques (23) comportent, en plus de la glissière intérieure (4) et de la glissière extérieure (5), une ou plusieurs glissières médianes.

6. Système de support de cuisson selon l'une des revendications 1 à 5, **caractérisé en ce qu'**il est prévu, au niveau des fixations de paroi (25) ou de la paroi latérale (1 a) du moufle à proximité de la paroi arrière (1 b) du moufle, des auxiliaires d'insertion (14) présentant des surfaces de guidage supérieures inclinées vers le haut en direction de la paroi arrière (1 b) du moufle et/ou des surfaces de guidage inférieures inclinées vers le bas en direction de la paroi arrière (1 b) du moufle.

7. Système de support de cuisson selon l'une des revendications 2 à 6, **caractérisé en ce que** l'évidement de paroi latérale (15) comporte un dispositif de fixation à baïonnette (18) se présentant sous la forme d'un évidement, ouvert vers le haut et en forme de fente, dans lequel la baïonnette (19) peut être encliquetée par abaissement.

8. Système de support de cuisson selon l'une des revendications 3 à 7, **caractérisé en ce que** le verrou (7) présente une surface de butée supérieure (9) et l'évidement de paroi latérale (15) présente une butée supérieure homologue (16), ladite surface de butée supérieure et ladite butée supérieure homologue étant étudiées pour limiter un soulèvement de l'unité de support de cuisson lorsque le verrou (7) se trouve dans une position de déverrouillage.

9. Système de support de cuisson selon la revendication 8, **caractérisé en ce que** le verrou (7) comporte un taquet d'arrêt (8) qui est agencé de façon que le verrou (7) vienne s'engager dans une position de verrouillage avec le dispositif de fixation (13) de la glissière intérieure (4), et **en ce que** la surface de butée (9) du verrou est conformée de façon à être éloignée de la butée homologue (16) de l'évidement de paroi latérale (15) lorsque l'on tourne le verrou dans la position de verrouillage, de sorte que la baïonnette (19) peut être totalement retirée du dispositif de fixation à baïonnette (18).
